# EUROPEAN PATENT SPECIFICATION

(11) **EP 4 339 076 B1**
(45) Date of publication and mention of the grant of the patent: **20.08.2025**
(21) Application number: 22195962.0
(22) Date of filing: 15.09.2022
(51) Int. Cl.: B62D 24/00, B62D 63/02, B62D 55/10, B62D 49/06

(54) **IMPROVED ROBOT PLATFORM**
VERBESSERTE ROBOTERPLATTFORM
PLATE-FORME DE ROBOT AMÉLIORÉE

(43) Date of publication of application: 20.03.2024
(73) Proprietor: Exobotic Technologies, 9810 Nazareth (BE)
(72) Inventor: PERNEEL, Rembrandt, Nazareth (BE); WAEGEMAN, Tim, Nazareth (BE)
(74) Representative: Rogiest, Wouter

(56) References cited:
- CN-A- 107 651 030
- CN-A- 109 305 238
- CN-B- 104 354 777
- US-A1- 2020 391 566

## Description

### Field of the invention

The present invention relates to a land vehicle, particularly to devices and methods relating to a robot platform.

### Background art

With the advent of autonomous vehicles, robot platforms have gained in popularity for a wide variety of tasks, including agriculture.

Robot platforms are developed to carry a variety of payloads on the body, which may be configured pivoting with respect to the wheels or other motion means. Payloads may include measurement instruments requiring high stability of the body, also during movement of the robot platform. Thereby, particularly the crossing of obstacles may be problematic for the body's stability.

Prior art devices and methods for stabilizing the body commonly fall back on a differential gear based on a plurality of gears. A problem with gears is the considerable weight, as well as the requirements regarding maintenance.

The well-known Mars Rover (Curiosity), illustrated in USD673482S1, comprises a top component that relies on rotation and torsion and may be useful for obstacle crossing and body stability. However, the top component results in increased height and/or takes up space useable for mounting of other components, which may be undesirable for many practical applications.

CN105477812A and CN112519913A disclose related devices. However, CN105477812A does not provide means for obstacle crossing other than the shape of the chassis cabin body and the presence of metal fin arms, which adds to weight and complexity. Similarly, CN112519913A is overly complex and bulky through the combination of foot-type and wheel-type movement. another example is shown in CN 107 651 030 A.

Additionally, for agricultural tasks, it is highly desirable to have a robot platform that is adaptable in width, which is not possible with the cited prior art methods and systems.

The present invention aims at addressing issues relating to body stability and obstacle crossing, such as the issues mentioned above.

### Summary of the invention

According to a first aspect, the present invention provides a robot platform, comprising:
two interconnected lateral frames each extending along a main direction of the robot platform and configured for receiving, at their respective ends, motion means, preferably wheels;
a body extending between the respective frames and configured pivoting with respect to the frames via two respective pivoting axes interconnecting the body and the respective frames;
wherein the robot platform further comprises a force transfer means extending along a force transfer path and configured for transferring a pivoting force of each one of the pivoting axes to the other one of the pivoting axes; and
wherein the force transfer means relates to pulling along a direction parallel to said path.

Such a robot platform may advantageously provide improved stability for the body, and/or, related, closer contact of all motion means with the ground, and/or better obstacle crossing capabilities. Particularly, the transferring of the pivoting force may relate to improved stability for the body and/or closer contact of all motion means with the ground and/or better obstacle crossing capabilities. Thereby, a lighter and more versatile means of force transfer may be provided than is available in the prior art. This may relate to relying on pulling along a direction parallel to the path, which contrasts with the torsion/rotation-based transfer involved in gears, or the pivoting top component involved in the Mars Rover (Curiosity). In such a way, the freedom with which the force transfer path is chosen is increased, allowing to avoid entering the payload area with the force transfer means. Also, the inherent flexibility of the path may be increased, since torsion/rotation-based transfer typically involves contacting attachment of rigid components, whereas transfer based on pulling along a direction parallel to the path may be realized with flexible components such as cables or push-pull cables. Increasing the inherent flexibility may allow, within a certain tolerance, to cater for different robot platform widths. This comes up to the requirements of agriculture, wherein adjustable width for the robot platform is highly desirable.

In embodiments, the freedom with respect to the location of the force transfer path allows to free up a larger area available for payload, particularly in strategic areas, such as above the pivoting axes. When placed above the pivoting axes, the payload contributes less to torsion on these axes than when placed on portions of the body further away from the pivoting axes. Related, less force may thus be exercised on the force transfer means. This, in its turn, may allow to carry heavier payloads and/or use a lighter force transfer means and/or lead to improved robustness for the robot platform as a whole.

Preferably, the force transfer path is non-overlapping with the transverse axis and/or any of the pivoting axes. The latter would be the case with a force transfer through gears. Instead, the force transfer path connects respective points that are fixed with respect to the respective frames via a path that may be chosen more freely, owing to force transfer based on pulling along a direction parallel to the path. This may be advantageous, as a gear-based force transfer would typically require going through the body, which makes width adjustment of the body complex or even impossible. The invention may hence enable to overcome this problem.

According to a second aspect, the invention provides a use of a force transfer means in a robot platform comprising two pivoting axes for transferring a pivoting force of each one of the pivoting axes to the other one of the pivoting axes, wherein said transferring relates to stabilizing a pivoting motion of a body of the robot platform that is configured pivoting with respect to further portions of the robot platform via said pivoting axes, wherein the force transfer means relates to pulling along a direction parallel to said path. Preferably, the force transfer means involves a push-pull cable.

According to a further aspect, the invention provides a kit comprising the robot platform according to the invention; and a plurality of cross bars according to at least two widths, for adjusting the width of the robot platform within a width tolerance of the force transfer means. This may have the advantage of providing a user with a robot platform that is employable for a variety of agricultural tasks, each with a different requirement with respect to robot platform width.

According to a further aspect, the invention offers a kit comprising the robot platform according to the invention, the robot platform comprising a force transfer means comprising a first push-pull cable; and a second push-pull cable with length different from the first push-pull cable for adjusting a width of the robot platform beyond the width tolerance of the first push-pull cable. Similarly, this may have the advantage of providing a user with a robot platform that is employable for a large variety of agricultural tasks, each with a different requirement with respect to robot platform width.

Preferred embodiments and their advantages are provided in the description and the dependent claims.

### Brief description of the drawings

The present invention will be discussed in more detail below, with reference to the attached drawings.

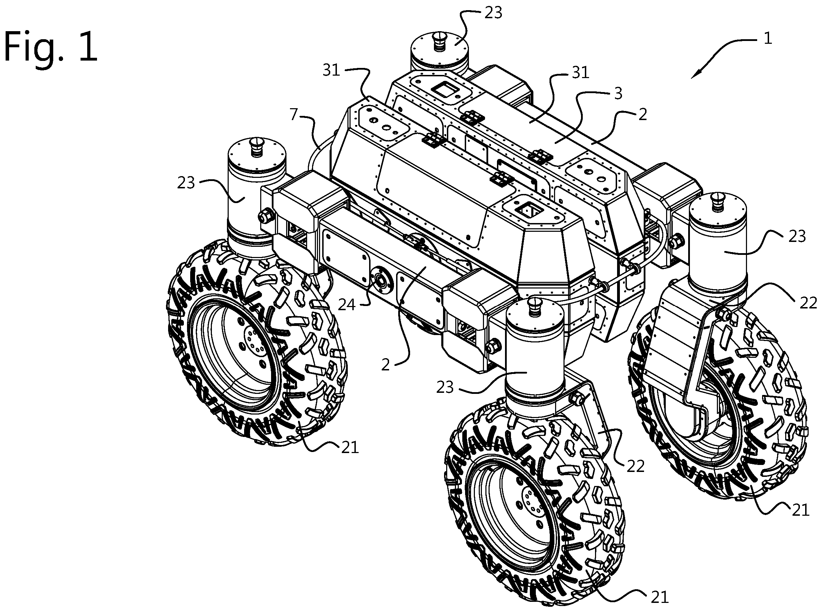

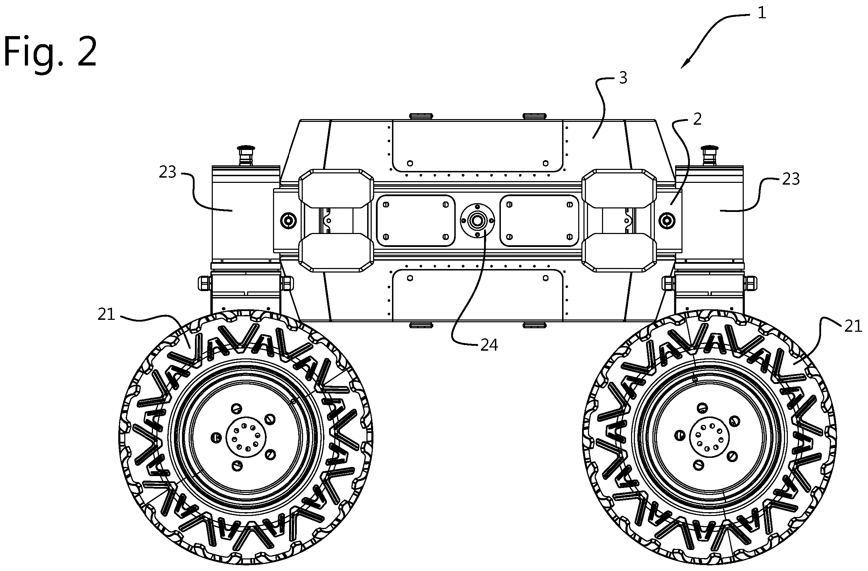

Fig. 1-4 show different views of an example robot platform according to the invention.

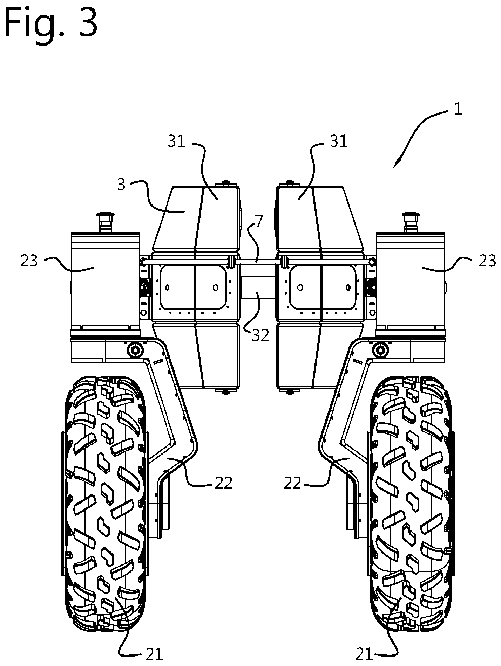

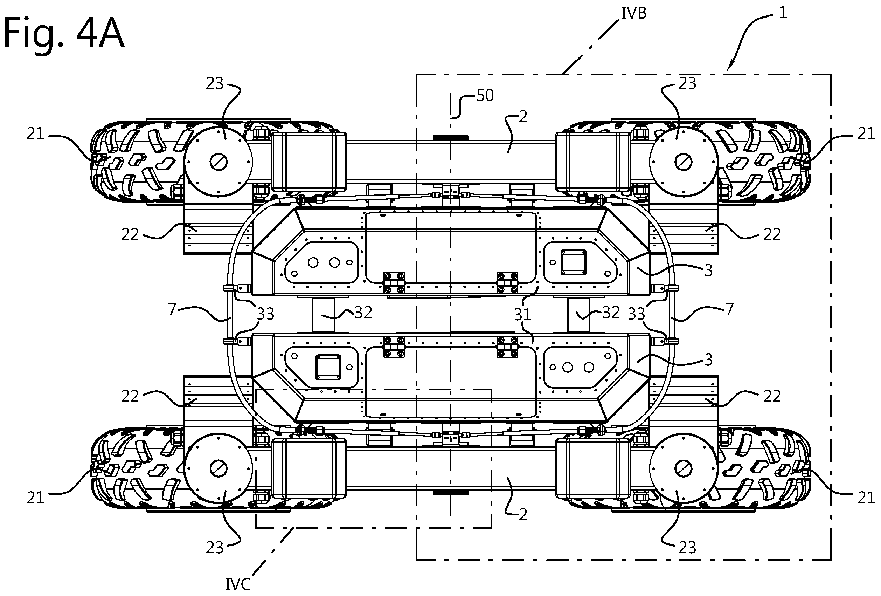

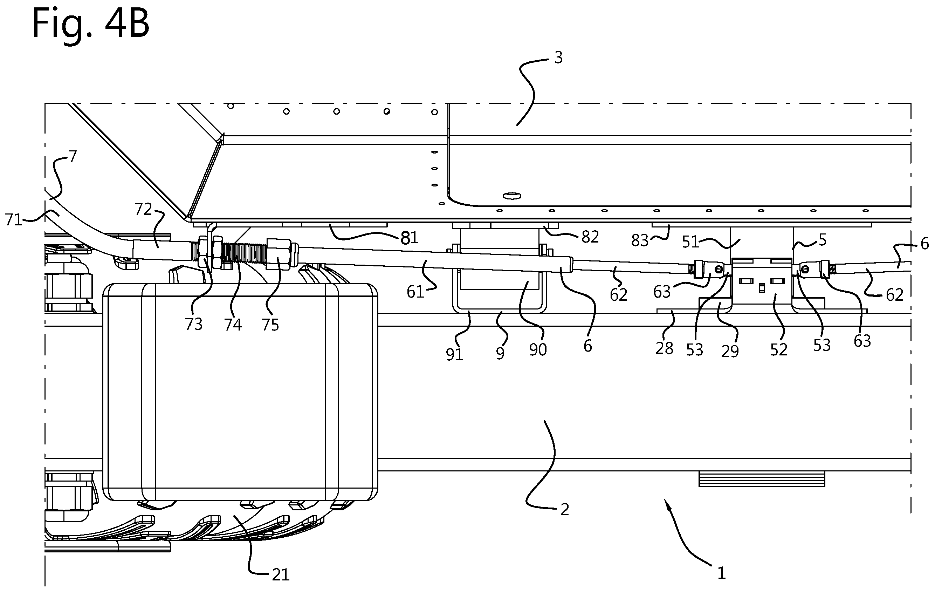

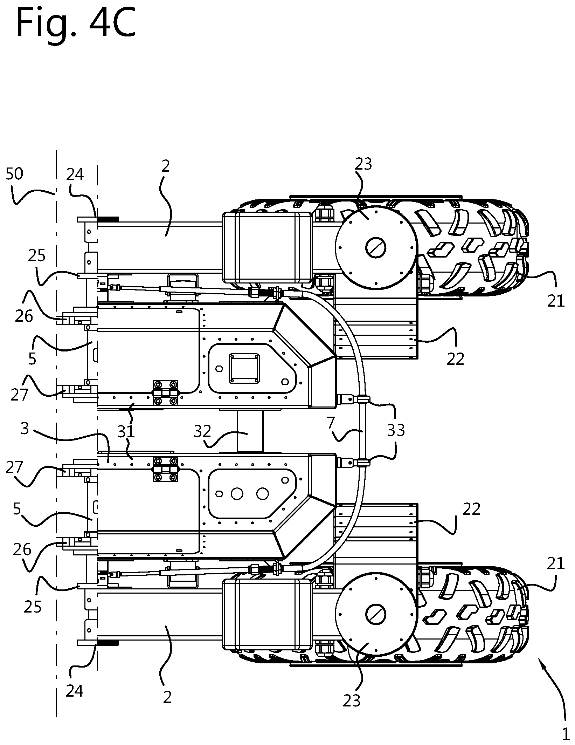

Thereby, Fig. 1, 2 and 4A show a perspective view, a side view, and a top view, respectively, each with the front section of the robot platform depicted on the right-hand side. Fig. 3 shows a front view. Fig. 4B shows a detail (rear section; right) of the top view of Fig. 5A. Fig. 4C shows a top section (front section).

### Description of embodiments

The following descriptions depict only example embodiments and are not considered limiting in scope. Any reference herein to the disclosure is not intended to restrict or limit the disclosure to exact features of any one or more of the exemplary embodiments disclosed in the present specification.

Furthermore, the terms first, second, third and the like in the description and in the claims are used for distinguishing between similar elements and not necessarily for describing a sequential or chronological order. The terms are interchangeable under appropriate circumstances and the embodiments of the invention can operate in other sequences than described or illustrated herein.

Furthermore, the various embodiments, although referred to as "preferred" are to be construed as exemplary manners in which the invention may be implemented rather than as limiting the scope of the invention.

The term "comprising", used in the claims, should not be interpreted as being restricted to the elements or steps listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising A and B" should not be limited to devices consisting only of components A and B, rather with respect to the present invention, the only enumerated components of the device are A and B, and further the claim should be interpreted as including equivalents of those components.

In this document, the term "robot platform" refers to any device that can travel over land. This may relate to any non-articulated or articulated vehicle. The robot platform may be suitable for monitoring, preferably autonomous monitoring, wherein the robot platform moves around in an environment to be monitored. Preferably, the robot platform is suitable at least for agricultural tasks, wherein the width of the robot platform, and the adjustability of that width, is of prime importance.

In this document, the terms "transverse plane", "sagittal plane", "coronal plane", "medial", "lateral", etc refer to well-known terms from human anatomy, wherein the analogy with the robot platform lies in comparing the front motion means to human arms/hands and the rear motion means to human legs/feet. This analogy is applied both to the body of the robot platform, on the one hand, and the robot platform as a whole, on the other hand. The analogy merely serves for describing geometrical planes, axes and positions relating to the invention, and does not limit the invention in any other way.

In this document, the term "push-pull means" relates to any means for transferring a pivoting force of a first axis to an inverse pivoting force of a second axis, and vice versa. Force transfer is performed along a force transfer path. The term "push-pull" relates to a pulling as well as pushing force along a direction parallel to the force transfer path.

In this document, reference to "stabilizing of the body" is not to be construed as limiting, as it may relate to any improvement at the interface between frames and body, in the broadest sense. For instance, this may relate to providing closer contact of the motion means with the ground, to ensure better motion for the robot platform as a whole. This may, e.g., relate to ground compliance. In other examples, this may relate to any form of improved obstacle crossing, including reactive obstacle crossing and proactive obstacle crossing as described in this document. In view thereof, "stabilizing of the body" may be used interchangeably with "improving obstacle crossing capability", or "improving motion means ground contact".

In this document, the width of the robot platform may be said to match a "required width". This may relate to an agricultural task at hand, wherein a default width is involved. For instance, the spraying of corn plants of a certain type may involve a first standard width between the lanes of corn, which is different from a second width relating to spacing between rows of vines, or a third width relating to fruit trees. As may be understood, making the width of the robot platform easily adaptable to the task at hand contributes to employability of the robot.

In embodiments, the force transfer means relates to a push-pull cable. Push-pull cables are well-known industrial components subject to standards, and are available for a broad variety of specifications, including different lengths, tolerances, slacks, and maximum load in push and in pull. Thereby, typically, a lubricant is present to enable pushing of the inner cable within the outer shell, while pulling is naturally enabled. Typical values for maximum pulling forces are 2 kN (kilonewton) or 5 kN or 10 kN or 20 kN or more than 20 kN. Typically, the maximum values for pushing forces are lower than those for pulling force. Typical values for maximum pushing forces are 0.5 or 1 or 2 or 3 or 4 kN or more than 4 kN.

In embodiments, the force transfer means comprises a cable extending along said path. This may advantageously yield a light robot platform. This may relate both to embodiments based on cables and pulling only, such as Example 3, or examples with push-pull cable, such as Examples 1, 2 and 4.

In embodiments, the force transfer means comprises a push-pull means. This is to be contrasted with embodiments with pulling only, such as Example 3, and may relate to embodiments with a single push-pull means, such as Example 2. In Example 2, this relates to a push-pull cable; however, the push-pull means may be any hydraulic means or pneumatic means or other mechanical or electromechanical or electronic push-pull means known to the skilled person. In Examples 1 and 4, this relates to two push-pull cables. However, also here, the push-pull means may be any pair of hydraulic means or pneumatic means or other mechanical or electromechanical or electronic push-pull means known to the skilled person.

In embodiments, the push-pull means is a push-pull cable. In some of these embodiments, the invention may be described, complementary to or replacing claim 1, as a robot platform, comprising:
two interconnected lateral frames each extending along a main direction of the robot platform and configured for receiving, at their respective ends, motion means, preferably wheels;
a body extending between the respective frames and configured pivoting with respect to the frames via two respective pivoting axes interconnecting the body and the respective frames;
wherein the robot platform further comprises a push-pull cable configured for transferring a pivoting force of each one of the pivoting axes to the other one of the pivoting axes for stabilizing said body.

In embodiments, the robot platform further comprises one or more rod heads for attaching the push-pull cable to the body. The rod heads may be plain rods without bearing in the head. Preferably, the one or more rod heads each comprise a bearing, preferably a spherical bearing, in the head for allowing the cable to move under force transfer. This may be advantageous as it may prevent the cable from breaking and/or may allow a higher load on the cable than would be possible with rigid attachments.

In embodiments, the body comprises two or more lateral body parts with an adjustable spacing therebetween for adjusting the width of the robot platform. The spacing may be realized by two cross bars but may also be realized through other means, such as a foldable accordion section of the body, and/or a telescopic medial section of the body, and/or a single central cross bar situated on or near the transverse axis and/or through reinforced portions of the force transfer means.

In embodiments, the force transfer path lies outside of the body. This may have the advantage of having the full design of the body independent of the force transfer means. Also, this may imply that a larger design volume is kept available for other functions of the body. Additionally, this may allow for adjustable width of the body independent of the force transfer means, which may simplify the design of the force transfer means and/or the body.

In embodiments, the outer contour of the body defines a payload area extending from a center of the body and coinciding with top portions of the body; wherein a maximum dimension, preferably a diameter, of said payload area is at least 10 cm, preferably at least 20 cm; and wherein said force transfer path lies exclusively outside said payload area. This may be advantageous for convenient and versatile use for different payloads. This is illustrated by each of Examples 1-3 (full area available) and Example 4 (large center area available).

In embodiments, the path extends within the volume defined between respective parallel planes comprising the respective topmost portion and bottom-most portion of the body for at least 50 % of the path length, preferably for the entire path length. Also, this may be advantageous for convenient and versatile use for different payloads. In embodiments with two or more paths, each of the paths may preferably extend within the volume defined between respective parallel planes comprising the respective topmost portion and bottom-most portion of the body for at least 50 % of the path length, preferably for the entire path length. This is illustrated by each of Examples 1-3 (entire path length).

In embodiments, the force transfer means extends along two disjoint paths, preferably involving two cables, more preferably two push-pull cables. This may advantageously provide improved stability and/or larger load capacity. This is illustrated by each of Examples 1, 3 and 4. In embodiments, the force transfer means extends along more than two disjoint paths, e.g., three or four. In such embodiments, the force transfer paths of the third and fourth force transfer components (e.g., cables) may run just below or above the force transfer paths of the first and second force transfer components (e.g., cables). In other embodiments, the force transfer paths are chosen independently of each other.

In embodiments, the force transfer means comprises an active section, wherein actuation of said active section causes a change of length of said active section. This may have the advantage of providing larger versatility in obstacle crossing and/or body stability handling. In embodiments, this relates to an active section present in the middle of each of the force transfer means, e.g., cables. This may allow to differentiate between reactive obstacle crossing, wherein a deviation is merely compensated for, and proactive obstacle crossing, wherein an angle is realized through contraction or expansion of the active section. For instance, this may relate to detecting an obstacle on the road ahead, e.g., through use of a camera and computer vision, and proactively lifting the front wheel that will contact the obstacle. In other examples, this may relate to applying an angle to the body, tilting it with respect to the frames over a desired angle. In related embodiments, this relates to two active sections present in the force transfer means, e.g., cables, for instance at each side of the robot platform. This would allow even more degrees of freedom in proactively handling obstacle crossing and/or stability of the body.

In embodiments, the robot platform further comprises said motion means, preferably wheels, provided at the respective ends of the frames; and actuation means for actuating said motion means, preferably for individually actuating said motions means.

In embodiments, the robot platform comprises one or more monitoring means and/or positioning means. This may relate to one or more sensors. The sensors may relate to one or more cameras and/or one or more positioning means and/or one or more accelerometer and/or one or more gyroscope and/or any other type of mechanical, electromechanical, or electronic sensor.

In embodiments, the robot platform comprises a battery. The battery may serve to power any of the actuations means and/or the monitoring means.

In embodiments, the robot platform comprises visual feedback means on an outward looking surface. This may relate to providing a visual indication relating to the status of the robot platform, e.g., relating to a status of a battery and/or the actuations means and/or the monitoring means and/or the positioning means, e.g., RGB leds, wherein the visual feedback may relate, e.g., to indicating a charging status of the battery.

In example embodiments, the environment to be monitored may relate to a plurality of plants. Thereby, in embodiments, the feature to be detected may be a plant or a portion of a plant or a status of a plant, e.g., a health status of a plant. Feature detection may relate, e.g., to deep learning as known to the skilled person.

In embodiments, the detection comprises detection, preferably mediated by a control unit comprised in the robot platform, based on data retrieved from the monitoring means. In embodiments, the detection comprises detection based on data retrieved from an external data source.

Example embodiments of the invention will be described with reference to Figs. 1-4C.

### Example 1: first example robot platform according to the invention

The example robot platform 1 according to the invention is shown on Fig. 1-4C. Fig. 1, 2 and 4A show a perspective view, a side view, and a top view, respectively, each with the front section of the robot platform depicted on the right-hand side. Fig. 3 shows a front view. Fig. 4B shows a detail (rear section; right) of the top view of Fig. 5A. Fig. 4C shows a top section (front section).

As may be seen on the Figures, the example robot platform exhibits a high degree of symmetry with respect to both the transverse plane (front vs. rear section) and the sagittal plane (left vs. right side). Accordingly, alternative example embodiments wherein the front section and rear section and/or the left side and right side are mirrored (reversed) are also deemed to be disclosed.

The robot platform 1 comprises two elongate lateral frames 2 that are essentially parallel, and each extend between a front end and a rear end, thereby defining a main direction of the robot platform. Thereby, the respective ends are configured for receiving respective wheels 21. The frames 2 are similar in shape and dimension and are provided mostly symmetrically with respect to the sagittal plane. In this example, the robot platform is symmetric with respect to a subsequent mirroring along both the sagittal and the transverse plane. Alternative example embodiments wherein the frames are mirrored versions with respect to only the sagittal plane are also deemed to be disclosed.

The wheels 21 are individually actuatable by actuation means 23 provided at said respective ends of the frames 2 and connected thereto by wheel struts 22. The whole of wheels, wheel struts and actuation means may be removeable for convenient replacement and/or maintenance and/or adaptation to the state of the terrain on which the robot platform moves. In example embodiments, other motion means different from the wheels as shown may be provided, e.g., tracked wheels, rubber tracks or steel tracks, or a combination of non-tracked wheels and tracked wheels.

The robot platform 1 further comprises a body 3 extending between the frames 2 configured pivoting with respect to the frames 2 via two respective pivoting axes 5 interconnecting the body 3 and the respective frames 2, and two respective pivoting axes 5 interconnecting the body 3 and the respective lateral frames 2. The body 3 comprises two or more lateral body parts 31 with an adjustable spacing therebetween for adjusting the width of the robot platform. In this example the lateral parts 31 are two in number and are spaced by two medially located cross bars 32 extending along a direction orthogonal to the sagittal plane. The cross bars, of approximately 5 cm in diameter, have been adapted in length prior to mounting by sawing, thereby matching the width of the robot platform 1 to the default required width of an agricultural task at hand.

The robot platform further comprises a force transfer means 7 comprises a pair of push-pull cables. The cables extend along two disjoint force transfer paths. The force transfer means are configured for transferring a pivoting force of each one of the pivoting axes 5 to the other one of the pivoting axes 5 for stabilizing said body 3. The cables 7 hereby fulfil a similar role. In fact, only a single cable would be sufficient, see Example 2. The advantage of having two cables may be that more force can be carried over and/or that improved stability is attained for the body. In variant examples, the number of cables is not two but four (not shown), wherein each of the cables as shown on the Figures is accompanied by a respective additional cable running just below or above the respective cable. In other variant examples, any number of cables, e.g., 3 or 4 or 5, may be provided, which may run according to any respective force transfer path.

Reference is made to Fig. 4B, illustrating a detail for the right rear section; the layout of the other three sections (left rear section, and both front sections) is similar or equal and is herewith considered to be disclosed as well. Hereby, the push-pull cable 7 comprises a main cable section 71 that is flexible and allows bending and extends between two similar ends each comprising components 72-75 and 6, with 61-63, with one end shown on Fig. 4B. Hereby, bridge section 72 connects the flexible cable shell to attachment section 74 which is provided with screw thread and is straight, to allow guiding the parts 61-63 into the flexible main cable section 71. Nuts 73 are screwed upon attachment section 74, thereby clamping the protruding portion of the cable support section 81 mounted on the body 3. This allows attachment of the cable with respect to the body 3, wherein the attachment is adjustable in axial direction over the attachment section 74. Nut 75 provides the nut which connects the plunger-like part 61 relatively flexibly with the attachment section 74. The plunger-like part 61 and the plunger-rod-like part 62 are actuated by linear movement of the plunger-rod-like part 62 within the plunger-like part 61, thereby transferring push or pull force to the end of the main cable section 71 which, in its turn, transfers this force to the other side of the robot platform. A certain flexibility is provided with respect to angle of insertion; this relates to several degrees of inclination allowable at the level of the interface between the attachment section 74 and the plunger-like part 61, e.g., up to 12 or 14 or 16 or 18 or 20 degrees. In this example, the layout is such that a small angle suffices to bridge the distance between the frame 2 and the body 3 and a fixed cable support section 81 is adequate. In other lay outs (not shown), the distance may be larger, and the fixed cable support section may be replaced by a rod head comprising a spherical bearing in the head. This may be like the rod heads 33 shown on the figures.

The plunger-rod-like part 62 is connected to the pivoting axis via connection head 63 interconnected with a protrusion 53 provided on the axis. This relates to an axis connection section that comprises one or more protrusions for converting a pivoting force into a linear force. In this example, the axis connection section comprises two protrusions, i.e., one per push-pull cable. Embodiments with a single protrusion on the axis connection section and both push-pull cables connected to the single protrusion are equally possible. Furthermore, in embodiments with more than two cables, each of the cables may also connect to a single protrusion, to two protrusions, or to a respective number of protrusions, e.g., with one protrusion per cable (not shown). At the level of the axis connection section, the connection head describes a concentric circle around the pivoting axis during movement of the robot. Thereby, the push-pull motion ensures that any deviation on the path of the robot, e.g., by crossing an obstacle, is compensated for, thereby stabilizing the body 3 in its pivoting motion around the transverse axis. In other words, the force transfer path, realized by the push-pull cable, connects respective points 53 that are fixed with respect to the respective frames 2.

In variant examples (not shown), the force transfer means 7 comprises an active section, wherein actuation of said active section causes a change of length of said active section. This may allow, e.g., to modulate the angle between the frames and the body. Thereby, the active section may be comprised in any component extending between the cable support section 81 and the pivoting axis 5. So in practice, any of the elements 74, 75, 61, 62, 63 belonging to the force transfer means 7, or the protrusion 53, may comprise said active section.

The pivoting axis further comprises a body-related section 51 surrounded by counter plate 83 and a frame-related section 52 that is held in place with respect to the frame 2 by means of parts 28 and 29. Other counter plates 24 and 25 and bearings 26 and 27 ensure that the body 3 is held in a pivoting configuration with respect to the frames, wherein the movement is guided to be pivoting around the pivoting axes 4 only.

Movement is further guided through the presence of rolling cylinder module 9 provided at four places on the robot platform. The module 9 comprises a rolling cylinder 90 that rolls over the contact portion 82 provided on the body 3 and is clamped on both sides by a holder element 91 attached to the frame 2. The modules 9 together ensure that the movement of the body with respect to the frames is limited to pivoting around the pivoting axes 5 (or, equivalently, the transverse axis 50) only.

The push-pull cables 7 each extend along a force transfer path that surrounds the body 3 circumferentially, as can be seen on the figures. The force transfer path lies outside of the body 3. Furthermore, the outer contour of the body 3 defines a payload area extending from a center of the body and coinciding with top portions of the body 3. This is the region where the robot platform typically carries payload. In this example, the maximum dimension of the payload area is much larger than 20 cm, as the payload area covers the entire top surface of the body parts 31, as well as the gap therebetween. Advantageously, the force transfer path lies exclusively outside this payload area. Thereby, for the entire path length, the cables 7 run within the volume defined between respective parallel planes comprising the respective topmost portion and bottom-most portion of the body 3. This has the advantage of minimal interference with the payload area as well as with the area surrounding the wheels.

Thereby, the cables provide a force transfer means that relates to pulling along a direction parallel to said path, particularly pushing and pulling. Along, the path a total of four rod heads 33 is provided for attaching the push-pull cable to the body 3. Thereby, the rod heads 33 each comprise a bearing, e.g., a spherical bearing, in the head for allowing the cable 7 to move under force transfer.

As may be understood from the figures, the robot platform can conveniently be adapted in width. This may be achieved by exchanging cross bars 32 with cross bars of different length. Thereby, the flexible nature of the cables 7 allow some tolerance with respect to width. Particularly, it may be advantageous to keep track of different widths (and corresponding cross bar lengths) that all fall within the width tolerance of the push-pull cables 7. On the other hand, widths beyond this tolerance can also be achieved, as the push-pull cables can conveniently be replaced by other push-pull cables of different length.

### Example 2: second example robot platform according to the invention

This example is essentially the same as Example 1, except that only a single push-pull means with a single push-pull cable 7 is provided, rather than two cables, or more than two cables. While a design with two or more cables may be more stable and more capable to deal with heavy payloads, a single cable may simplify the design, may be easier/faster to interchange when changing the width of the robot platform, and may be sufficient for lighter payloads, especially when the payload is placed near or above the pivoting axes, as this minimizes the torsion exercised on these axes. In this example, the cable 7 is provided at the rear section of the robot platform 1 and may be attached essentially as discussed in Example 1, e.g., by means of protrusion 53 and rod heads 33. In alternative examples, the single cable 7 is provided at the front section instead of the rear section and may be attached like in Example 1.

### Example 3: third example robot platform according to the invention

In this example, the push-pull means does not comprise a push-pull cable. Instead, the push-pull operation is provided by a pair of plain cables, preferably metal cables, that are arranged like the cables 5 of Example 1. Thereby, the cables are arranged close to the body 3 with position elements, e.g., gliders or guides or similar components. For each push or pull originating from one pivoting axis, a pulling force is exerted on one of the cables, which is connected to the protrusion 53 on the other pivoting axis situated at the other platform side. The pushing force exerted on the other one of the cables is cancelled out by the pulling force exerted on said protrusion on the other pivoting axis, so no net push force is exerted on any of the cables. In this example, the force transfer means hence comprises two cables extending along two disjoint force transfer paths, and relies entirely and pulling, not on pushing. In variant examples, the number of cables is not two but four (not shown), wherein each of the respective cables is accompanied by a respective additional cable running just below or above the respective cable. Thereby, each of the cables may also connect to the pivoting axes via a single protrusion, to two protrusions, or to a respective number of protrusions, e.g., with one protrusion per cable (not shown).

Since the guiding of a cable under pull typically does not require a lubricant, the robot platform may conveniently be simpler in design and maintenance.

### Example 4: fourth example robot platform according to the invention

This example is essentially the same as Example 1, with the respective pivoting axes 5 still present on the transverse axis (50), i.e., centrally, yet not provided with the respective protrusions 53, and the push-pull cables 7 not connected to the pivoting axes 5. Instead, the respective push-pull cables 7 extend between top or side portions of the front and rear section of the frames, respectively. Accordingly, the respective push-pull cables 7 extend over (and, when wheels contact the ground, above) top portions of the front and rear section of the body 3, respectively, and are connected thereto through attachments means, e.g., rod heads 33 like in Example 1. The force transfer path hence is situated at considerable distance from the transverse axis, and may, e.g., be parallel thereto. With the ends of the respective push-pull cables 7 connected to the end sections of the frames, there is still a large, low and centrally located area available for payload. Also, the inherent flexibility of the push-pull cables allows some adjustment of the length of cross bars 32 without requiring a change of cables 7. Different from Examples 1-3, the push-pull displacement of the ends of the push-pull cables 7 will "merely" lead to a proportional pivoting of the body around the pivoting axes 5. This is opposed to the push-pull displacement of Examples 1-3, which is "magnified" when going from the pivoting axes to the front and rear section of the body 3. This "magnification" is not present in Example 4, as displacement coming from the push-pull cable 7 is transferred into a proportional displacement of the front and rear section of the body 3. Apart from this difference in "amplitude", the embodiments of Example 4 may enjoy advantages similar to those of Examples 1-3.

### (End of example 4)

In the above, several examples are given wherein the vehicle is a robot platform comprising wheels as motion means. However, the vehicle may comprise further actuation means or may comprise, instead of trackless wheels, tracked wheels.

## Claims

1. A robot platform (1), comprising:
two interconnected lateral frames (2) each extending along a main direction of the robot platform (1) and configured for receiving, at their respective ends, motion means (21), preferably wheels;
a body (3) extending between the respective frames (2) and configured pivoting with respect to the frames (2) via two respective pivoting axes (5) interconnecting the body (3) and the respective frames (2);
wherein the robot platform further comprises a force transfer means (7) extending along a force transfer path and configured for transferring a pivoting force of each one of the pivoting axes (5) to the other one of the pivoting axes (5), preferably for stabilizing said body; and
wherein the force transfer means (7) relates to pulling along a direction parallel to said path.

2. Robot platform (1) of claim 1, wherein the force transfer means comprises a cable (7) extending along said path.

3. Robot platform (1) of claims 1 or 2, wherein the force transfer means comprises a push-pull means (7).

4. Robot platform (1) of claim 3, wherein the push-pull means is a push-pull cable (7).

5. Robot platform (1) of claim 4, further comprising one or more rod heads (33) for attaching the push-pull cable to the body (3), wherein the one or more rod heads (33) each comprise a bearing in the head for allowing the cable (7) to move under force transfer.

6. Robot platform (1) of claims 1-5, wherein the body (3) comprises two or more lateral body parts (31) with an adjustable spacing therebetween for adjusting the width of the robot platform (1).

7. Robot platform (1) of claims 1-6, wherein the force transfer path lies outside of the body (3).

8. Robot platform (1) of claims 1-7, wherein the outer contour of the body (3) defines a payload area extending from a center of the body and coinciding with top portions of the body (3);
wherein a maximum dimension, preferably a diameter, of said payload area is at least 10 cm, preferably at least 20 cm; and
wherein said force transfer path lies exclusively outside said payload area.

9. Robot platform (1) of claims 1-8, wherein the path extends, preferably each of the paths extend, within the volume defined between respective parallel planes comprising the respective topmost portion and bottom-most portion of the body (3) for at least 50% of the path length, preferably for the entire path length.

10. Robot platform (1) of claims 1-9, wherein the force transfer means extends along two disjoint paths, preferably involving two cables, more preferably two push-pull cables (7).

11. Robot platform (1) of claims 1-10, wherein the force transfer means comprises an active section, wherein actuation of said active section causes a change of length of said active section.

12. Robot platform (1) of claims 1-11, further comprising:
said motion means (21), preferably wheels, provided at the respective ends of the frames (2); and
actuation means (23) for actuating said motion means (21), preferably for individually actuating said motions means (21).

13. Use of a push-pull cable (7) in a robot platform (1) comprising two pivoting axes (5) for transferring a pivoting force of each one of the pivoting axes (5) to the other one of the pivoting axes (5), wherein said transferring relates to stabilizing a pivoting motion of a body (3) of the robot platform (1) that is configured pivoting with respect to further portions of the robot platform (1) via said pivoting axes (5).

14. Kit comprising:
the robot platform (1) according to claims 6-12; and
a plurality of cross bars (32) according to at least two widths, for adjusting the width of the robot platform (1) within a width tolerance of the force transfer means.

15. Kit comprising:
the robot platform (1) according to claims 6-12 comprising a force transfer means comprising a first push-pull cable (7); and
a second push-pull cable with length different from the first push-pull cable (7) for adjusting a width of the robot platform (1) beyond the width tolerance of the first push-pull cable (7).

## Patentansprüche

1. Roboterplattform (1), umfassend:
zwei miteinander verbundene seitliche Rahmen (2), die sich jeweils entlang einer Hauptrichtung der Roboterplattform (1) erstrecken und zum Aufnehmen von Bewegungsmitteln (21), vorzugsweise Rädern, an ihren jeweiligen Enden konfiguriert sind;
einen Körper (3), der sich zwischen den jeweiligen Rahmen (2) erstreckt und in Bezug auf die Rahmen (2) über zwei jeweilige Schwenkachsen (5), die den Körper (3) und die jeweiligen Rahmen (2) miteinander verbinden, schwenkbar konfiguriert ist;
wobei die Roboterplattform ferner ein Kraftübertragungsmittel (7) umfasst, das sich entlang eines Kraftübertragungsweges erstreckt und zum Übertragen einer Schwenkkraft von jeder der Schwenkachsen (5) auf die andere der Schwenkachsen (5), vorzugsweise zur Stabilisierung des Körpers, konfiguriert ist; und
wobei das Kraftübertragungsmittel (7) sich auf das Ziehen entlang einer Richtung parallel zu dem Weg bezieht.

2. Roboterplattform (1) nach Anspruch 1, wobei das Kraftübertragungsmittel ein Kabel (7) umfasst, das sich entlang des Weges erstreckt.

3. Roboterplattform (1) nach Anspruch 1 oder 2, wobei das Kraftübertragungsmittel ein Schub-Zug-Mittel (7) umfasst.

4. Roboterplattform (1) nach Anspruch 3, wobei das Schub-Zug-Mittel ein Schub-Zug-Kabel (7) ist.

5. Roboterplattform (1) nach Anspruch 4, die ferner einen oder mehrere Stangenköpfe (33) zum Anbringen des Schub-Zug-Kabels an dem Körper (3) umfasst, wobei der eine oder die mehreren Stangenköpfe (33) jeweils ein Lager in dem Kopf umfassen, um es dem Kabel (7) zu ermöglichen, sich unter Kraftübertragung zu bewegen.

6. Roboterplattform (1) nach Anspruch 1 bis 5, wobei der Körper (3) zwei oder mehr seitliche Körperteile (31) mit einem einstellbaren Abstand dazwischen zur Einstellung der Breite der Roboterplattform (1) aufweist.

7. Roboterplattform (1) nach Anspruch 1 bis 6, wobei der Kraftübertragungsweg außerhalb des Körpers (3) liegt.

8. Roboterplattform (1) nach Anspruch 1-7, wobei die Außenkontur des Körpers (3) einen Nutzlastbereich definiert, der sich von einer Mitte des Körpers aus erstreckt und mit oberen Abschnitten des Körpers (3) zusammenfällt;
wobei eine maximale Abmessung, vorzugsweise ein Durchmesser, des Nutzlastbereichs mindestens 10 cm, vorzugsweise mindestens 20 cm, beträgt; und
wobei der Kraftübertragungsweg ausschließlich außerhalb des Nutzlastbereichs liegt.

9. Roboterplattform (1) nach Anspruch 1 bis 8, wobei sich der Pfad, vorzugsweise jeder der Pfade, über mindestens 50 % der Pfadlänge, vorzugsweise über die gesamte Pfadlänge, innerhalb des Volumens erstreckt, das zwischen jeweiligen parallelen Ebenen definiert ist, die den jeweiligen obersten Abschnitt und untersten Abschnitt des Körpers (3) umfassen.

10. Roboterplattform (1) nach Anspruch 1 bis 9, wobei sich das Kraftübertragungsmittel entlang zweier disjunkter Pfade erstreckt, die vorzugsweise zwei Kabel, insbesondere zwei Schub-Zug-Kabel (7), umfassen.

11. Roboterplattform (1) nach Anspruch 1-10, wobei das Kraftübertragungsmittel einen aktiven Abschnitt umfasst, wobei die Betätigung des aktiven Abschnitts eine Änderung der Länge des aktiven Abschnitts bewirkt.

12. Roboterplattform (1) nach Anspruch 1-11, ferner umfassend:
die Bewegungsmittel (21), vorzugsweise Räder, die an den jeweiligen Enden der Rahmen (2) vorgesehen sind; und
Betätigungsmittel (23) zum Betätigen der Bewegungsmittel (21), vorzugsweise zum individuellen Betätigen der Bewegungsmittel (21).

13. Verwendung eines Schub-Zug-Kabels (7) in einer Roboterplattform (1), die zwei Schwenkachsen (5) umfasst, zur Übertragung einer Schwenkkraft von jeder der Schwenkachsen (5) auf die andere der Schwenkachsen (5), wobei sich die Übertragung auf die Stabilisierung einer Schwenkbewegung eines Körpers (3) der Roboterplattform (1) bezieht, der in Bezug auf weitere Abschnitte der Roboterplattform (1) über die Schwenkachsen (5) schwenkbar konfiguriert ist.

14. Bausatz, umfassend:
die Roboterplattform (1) nach Anspruch 6-12; und
eine Vielzahl von Querstangen (32) gemäß mindestens zwei Breiten, um die Breite der Roboterplattform (1) innerhalb einer Breitentoleranz des Kraftübertragungsmittels einzustellen.

15. Bausatz, umfassend:
die Roboterplattform (1) nach Anspruch 6 bis 12, die ein Kraftübertragungsmittel umfasst, das ein erstes Schub-Zug-Kabel (7) umfasst; und
ein zweites Schub-Zug-Kabel mit einer Länge, die sich vom ersten Schub-Zug-Kabel (7) unterscheidet, um eine Breite der Roboterplattform (1) über die Breitentoleranz des ersten Schub-Zug-Kabels (7) hinaus einzustellen.

## Revendications

1. Une plate-forme robotisée (1), comprenant :
deux cadres latéraux (2) interconnectés s'étendant chacun le long d'une direction principale de la plate-forme robotisée (1) et configurés pour recevoir, à leurs extrémités respectives, des moyens de déplacement (21), de préférence des roues ;
un corps (3) s'étendant entre les cadres respectifs (2) et configuré pour pivoter par rapport aux cadres (2) par l'intermédiaire de deux axes de pivotement respectifs (5) reliant le corps (3) et les cadres respectifs (2) ;
dans lequel la plate-forme robotisée comprend en outre un moyen de transfert de force (7) s'étendant le long d'un chemin de transfert de force et configuré pour transférer une force de pivotement de chacun des axes de pivotement (5) à l'autre un des axes de pivotement (5), de préférence pour stabiliser ledit corps ; et
dans lequel le moyen de transfert de force (7) se rapporte à la traction le long d'une direction parallèle audit chemin.

2. La plate-forme robotisée (1) selon la revendication 1, dans lequel le moyen de transfert de force comprend un câble (7) s'étendant le long dudit chemin.

3. La plate-forme robotisée (1) selon les revendications 1 ou 2, dans lequel le moyen de transfert de force comprend un moyen de poussée et de traction (7).

4. La plate-forme robotisée (1) selon la revendication 3, dans lequel le moyen de poussée et de traction est un câble de poussée et de traction (7).

5. La plate-forme robotisée (1) selon la revendication 4, comprenant en outre une ou plusieurs têtes de tige (33) pour fixer le câble de poussée et de traction au corps (3), dans lequel la ou les têtes de tige (33) comprennent chacune un roulement dans la tête pour permettre au câble (7) de se déplacer sous l'effet du transfert de force.

6. La plate-forme robotisée (1) selon les revendications 1 à 5, dans lequel le corps (3) comprend deux ou plusieurs parties de corps latérales (31) avec un espacement réglable entre elles pour ajuster la largeur de la plate-forme robotisée (1).

7. La plate-forme robotisée (1) selon les revendications 1 à 6, dans lequel le chemin de transfert de force se situe à l'extérieur du corps (3).

8. La plate-forme robotisée (1) selon les revendications 1 à 7, dans lequel le contour extérieur du corps (3) définit une zone de charge utile s'étendant à partir d'un centre du corps et coïncidant avec les parties supérieures du corps (3) ;
dans lequel une dimension maximale, de préférence un diamètre, de ladite zone de charge utile est d'au moins 10 cm, de préférence d'au moins 20 cm ; et
dans lequel le chemin de transfert de force se situe exclusivement à l'extérieur de ladite zone de charge utile.

9. La plate-forme robotisée (1) selon les revendications 1 à 8, dans lequel le chemin s'étend, de préférence chacun des chemins s'étend, dans le volume défini entre les plans parallèles respectifs comprenant la partie supérieure et la partie inférieure du corps (3) sur au moins 50% de la longueur du chemin, de préférence sur toute la longueur du chemin.

10. La plate-forme robotisée (1) selon les revendications 1 à 9, dans lequel le moyen de transfert de force s'étend le long de deux chemins disjoints, de préférence impliquant deux câbles, plus de préférence deux câbles de poussée et de traction (7).

11. La plate-forme robotisée (1) selon les revendications 1 à 10, dans lequel le moyen de transfert de force comprend une section active, l'actionnement de ladite section active entraînant un changement de longueur de ladite section active.

12. La plate-forme robotisée (1) selon les revendications 1 à 11, comprenant en outre :
lesdits moyens de déplacement (21), de préférence des roues, placés aux extrémités respectives des cadres (2) ; et
des moyens d'actionnement (23) pour actionner lesdits moyens de déplacement (21), de préférence pour actionner individuellement lesdits moyens de déplacement (21).

13. Une utilisation d'un câble de poussée et de traction (7) dans une plate-forme robotisée (1) comprenant deux axes de pivotement (5) pour transférer une force de pivotement de chacun des axes de pivotement (5) à l'autre un des axes de pivotement (5), dans lequel ledit transfert se rapporte à la stabilisation d'un mouvement de pivotement d'un corps (3) de la plate-forme robotisée (1) qui est configuré pour pivoter par rapport à d'autres parties de la plate-forme robotisée (1) par l'intermédiaire desdits axes de pivotement (5).

14. Un kit comprenant :
la plate-forme robotisée (1) selon les revendications 6 à 12 ; et
une pluralité de barres transversales (32) selon au moins deux largeurs, pour ajuster la largeur de la plate-forme robotisée (1) dans une tolérance de largeur du moyen de transfert de force.

15. Le kit comprenant :
la plate-forme robotisée (1) selon les revendications 6 à 12, comprenant un moyen de transfert de force comprenant un premier câble de poussée et de traction (7) ; et
un second câble de poussée et de traction d'une longueur différente du premier câble de poussée et de traction (7) pour ajuster une largeur de la plate-forme robotisée (1) au-delà de la tolérance de largeur du premier câble de poussée et de traction (7).
